# EUROPEAN PATENT SPECIFICATION

(11) **EP 2 357 282 B1**
(45) Date of publication and mention of the grant of the patent: **13.03.2013**
(21) Application number: 10190028.0
(22) Date of filing: 04.11.2010
(51) Int. Cl.: E02B 7/16, G01F 1/00

(54) **A weir**
Stauanlage
Chicane

(30) Priority: 12.02.2010 IE 20100080
(43) Date of publication of application: 17.08.2011
(73) Proprietor: Corbett, Patrick, Cahir Tipperary (IE)
(72) Inventor: Corbett, Patrick, Cahir Tipperary (IE)
(74) Representative: Schütte, Gearoid

(56) References cited:
- WO-A1-03/010496
- GB-A- 2 249 392
- NL-C1- 1 019 529

## Description

### Introduction

This invention relates to weirs.

It is well recognised that there is a need to monitor water resources in order to correctly manage these water resources to meet environmental and social needs. Once of the most important characteristics to be measured in relation to the surface water is the volume flow of water through streams. A weir can be mounted in a stream to channel stream flow which can be monitored by means of an associated gauging station. However, to construct a weir in a stream can present difficulties and cause considerable disturbance to the stream during installation. In some cases the stream may need to be diverted during installation. If the weir is cast in situ sulphates and other chemicals can be released into the stream flow which is undesirable from an environmental point of view.

The present invention is directed towards overcoming these problems.

NL1019529 discloses a construction method for a weir as disclosed in the preamble of claim 1 in which a weir wall is placed on top of a geotextile laid at the bottom of an associated excavation which is then filled in to form a water course. In WO03/010496 there is shown a venturi measuring passage for measuring flow rate in a water channel. GB2249392 discloses a method for measuring water flow in a channel by reducing the channel width in a narrowed throat section such that water flow becomes horizontal and of uniform velocity at a measuring section of the channel.

### Statements of Invention

According to the invention there is provided a pre-fabricated weir assembly of reinforced concrete construction, including a base platform, an upstanding weir wall on an upper surface of the base platform, said weir wall having an upstream wall face and a downstream wall face, the downstream wall face being substantially perpendicular to the upper surface of the base platform, and said weir wall having a

V-shaped top face which tapers inwardly and downwardly from each side of the top face to a flow concentration recess on the top face, and a pair of upright end walls adapted for interlocking engagement with the base platform at each end of the weir wall, characterised in that the upstream wall face is inclined relative to said upper surface of the base platform.

In one embodiment of the invention, the base platform has outer side portions which extend outwardly of each end of the weir wall, each of said outer side portions being engagable with a complementary slot in an associated end wall.

In another embodiment, the outer side portions project through the end walls when in engagement therewith.

In a further embodiment, each end wall has the slot in its lower face for reception of and engagement with the base platform. Conveniently the slot is open at its lower end. Preferably the slot is deeper than the base platform and when the base platform is engaged with the slot the end wall extends below the base platform.

In one embodiment of the invention a downwardly extending flange is provided at an upstream edge of the base platform.

In another embodiment, a lamprey pass is provided formed by a ramp mounted on the base platform abutting a downstream face of the weir wall and gradually sloping upwardly between the upper surface of base platform and the top face of the weir wall.

In a preferred embodiment, said ramp has a slope in the range 1:4 to 1:6, and most preferably the slope is about 1:5.

In a further embodiment, at least one associated buttress element is engagable with an outer face of each end wall at each end of the end wall. Conveniently a pair of buttress elements are provided for engagement with each end of the end wall which projects outwardly of the base platform when engaged therewith.

In another embodiment, a top face of the main weir wall is sloped downwardly from an upstream edge to a downstream edge of said top face.

In a further embodiment, the slope of said top face is about 1:5.

In another embodiment, the base platform extends outwardly of the downstream wall face and the upstream wall face of the weir wall by a distance equal to or greater than the maximum width of the weir wall.

In another aspect, there is provided a method for installing a prefabricated reinforced concrete weir assembly in a stream, including the steps:
forming a trench extending across a bed of the stream by excavating material from the stream bed,
forming a marl clay bed in the trench by backfilling the trench to a desired level with marl clay,
placing the prefabricated reinforced concrete weir onto the marl clay bed and securing the prefabricated reinforced concrete weir on the marl clay bed.

### Detailed Description of the Invention

The invention will be more clearly understood by the following description of some embodiments thereof, given by way of example only with reference to the accompanying drawings, in which:
Fig. 1 is a perspective view of a weir assembly according to the invention;
Fig. 2 is a detail sectional elevational view of a base platform and outer portion of the weir wall of the weir assembly;
Fig. 3 is a detail sectional elevational view of the base platform and a central portion of the weir wall;
Fig. 4 is a side elevational view showing the base platform and a downstream face of the weir wall;
Fig. 5 is an elevational view of the weir assembly showing an end wall in engagement with the base platform;
Fig. 6 is a perspective view showing portion of another weir assembly according to a second embodiment of the invention;
Fig. 7 is a detail perspective view of the weir assembly portion of Fig. 6;
Fig. 8 is another detail perspective view of the weir assembly portion of Fig. 6;
Fig. 9 is a detail plan view of the weir assembly portion of Fig. 6;
Fig. 10 is a perspective view of portion of another weir;
Fig. 11 is a perspective view of another weir assembly of the invention;
Fig. 12 is another perspective view of the weir assembly shown in Fig. 11;
Fig. 13 is a detail sectional elevational view of a base platform and outer portion of a weir wall of the weir assembly of Fig. 11; and
Fig. 14 is a detail sectional elevational view of the base platform and a central portion of the weir wall of the weir assembly of Fig. 11.

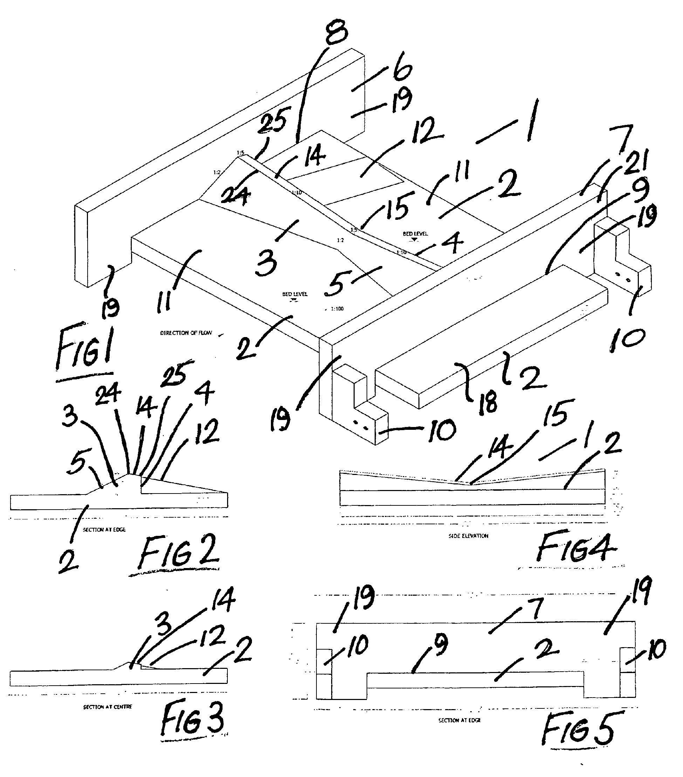

Referring to the drawings, and initially to Figs. 1 to 5 thereof, there is shown a weir assembly according to the invention indicated generally by the reference numeral 1. The weir assembly 1 is of reinforced concrete construction. The weir assembly 1 has a base platform 2 for mounting on a river bed or the like. Centrally located on the base platform 2 is an upstanding weir wall 3 having a substantially vertical downstream wall face 4 and an inclined upstream wall face 5. That is the downstream wall face 4 is substantially perpendicular to an upper surface 11 of the base platform 2 and the upstream wall face 5 is inclined relative to said upper surface 11 of the base platform 2. A pair of upright end walls 6, 7 sit on the base platform 2. Each end wall 6, 7 has a central notch or slot 8, 9 in its lower face for reception of and engagement with outer side portions 17, 18 of the base platform 2 which extend outwardly of each end of the weir wall 3.

Each slot 8, 9 is open at its lower end. It will also be noted that the slot 8, 9 is deeper than the base platform 2. Thus, when the base platform 2 is engaged with the slot 8, 9 outer end portions 19 of the end wall 6, 7 extend below the base platform 2. It will be noted also that the outer side portions 17, 18 of the base platform 2 project outwardly of the outer face 21 of each end wall 6, 7.

L-shaped buttress elements 10 engage outer faces 21 of the end walls 6, 7 at each end 19 of the end wall 6, 7. A lamprey pass 12 is formed by a ramp of slope 1:5 which is mounted on the base platform 2 to provide a gradual slope between the upper surface 11 of the base platform 2 and a top face 14 of the weir wall 3 on the downstream side of the weir wall 3.

The planar top face 14 of the weir wall 3 tapers downwardly and inwardly from each side towards a flow concentrating central notch or recess 15. Also, the top face 14 is sloped downwardly from an upstream edge 24 to a downstream edge 25 of the top face 14. Typically, the slope is about 1:5. Preferably the weir wall 3 and base platform 2 are integral.

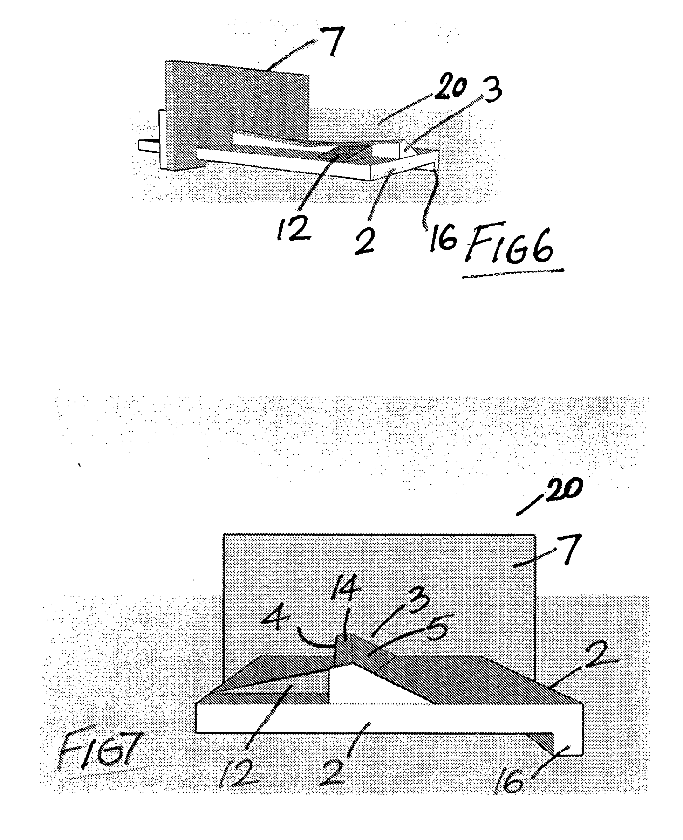

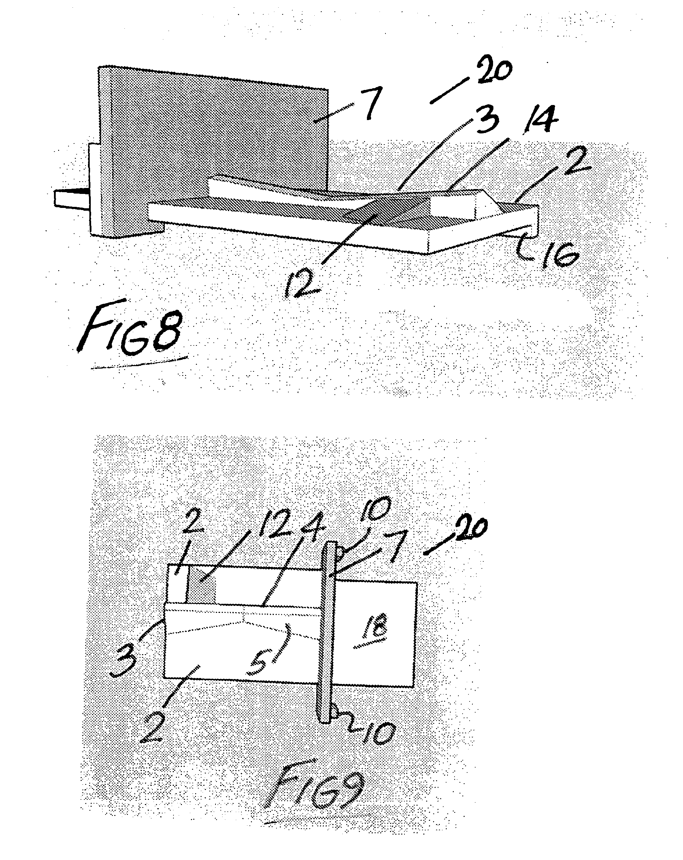

Referring now to Figs. 6 to 9 there is shown another weir assembly according to a second embodiment of the invention indicated generally by the reference numeral 20. Parts similar to those described previously are assigned the same reference numerals. In this case a downwardly extending anchor flange 16 is provided at a leading or upstream edge of the base platform 2.

It will be appreciated that in use the lamprey pass 12 provides means by which fish in general and lamprey in particular may traverse the weir 1 to move upstream in the river or like wherein the weir 1 is mounted.

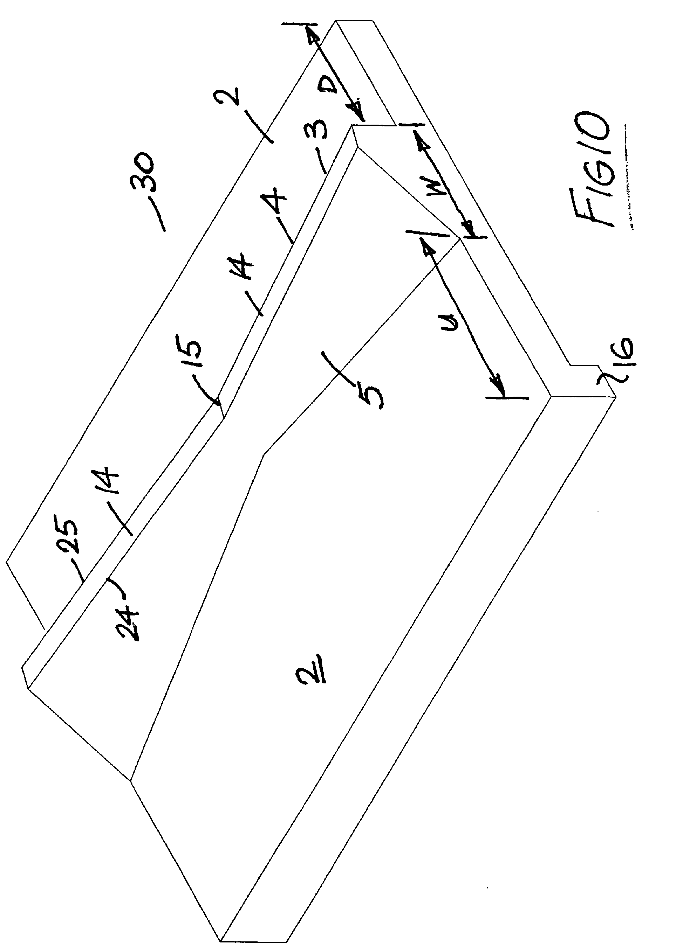

Referring now to Fig. 10, there is shown another weir according to the invention indicated generally by the reference numeral 30. Parts similar to those described previously are assigned the same reference numerals. As can be seen in the drawing, the base platform 2 weir wall 3 and flange 16 are all integrally formed from reinforced concrete material. Generally the flange 16 should extend below the base platform 2 by at least 225 mm, depending on the bed type and flow. It will also be noticed that the base platform 2 extends outwardly of the downstream wall face 4 and outwardly of the upstream wall face 5 of the weir wall 3 by a distance D,U which is greater than or equal to the maximum width W of the bottom of the weir wall 3.

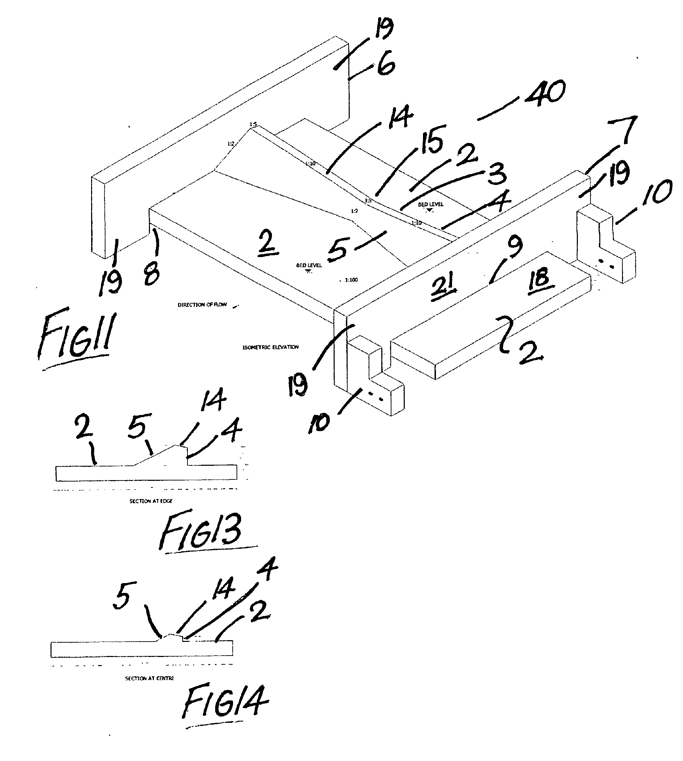

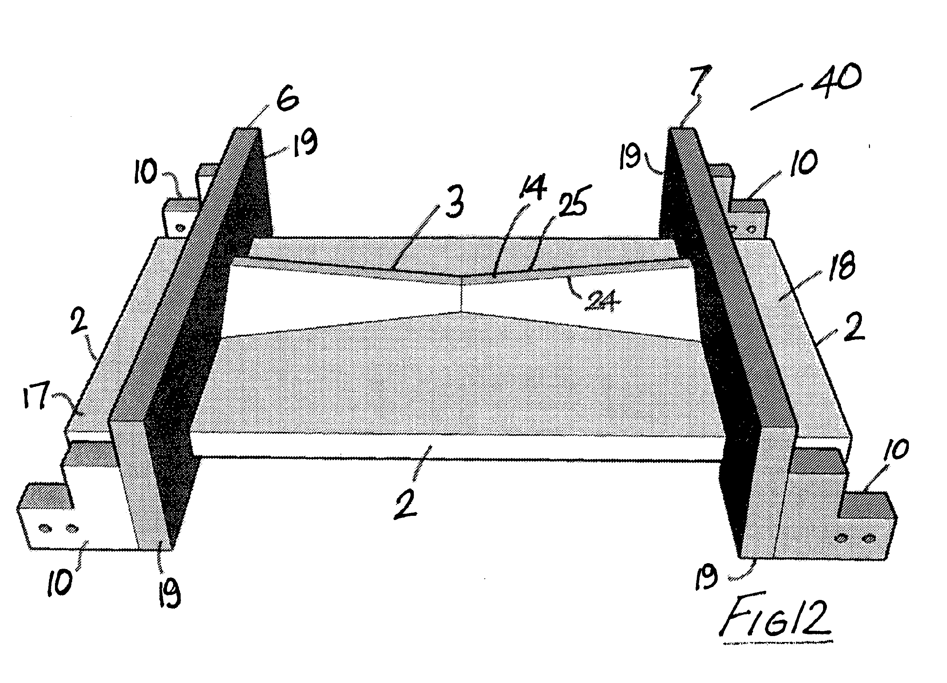

Referring now to Figs. 11 to 14, there is shown a weir assembly according to another embodiment of the invention indicated generally by the reference numeral 40. Parts similar to those described previously are assigned the same reference numerals. This is largely similar to the weir construction shown in Fig. 1. In this case however no lamprey pass has been provided on the weir 40.

The invention is not limited to the embodiments hereinbefore described which may be varied in both construction and detail with the scope of the appended claims.

## Claims

1. A pre-fabricated weir assembly (1) of reinforced concrete construction, including:
a base platform (2);
an upstanding weir wall (3) on an upper surface (11) of the base platform (2), said weir wall (3) having an upstream wall face (5) and a downstream wall face (4), the downstream wall face (4) being substantially perpendicular to the upper surface (11) of the base platform (2), and said weir wall (3) having a V-shaped top face (14) which tapers inwardly and
downwardly from each side of the top face (14) to a flow concentration recess (15) on the top face (14); and
a pair of upright end walls (6, 7) adapted for interlocking engagement with the base platform (2) at each end of the weir wall (3),
**characterised in that** the upstream wall face (5) is inclined relative to said upper surface (11) of the base platform (2).

2. A weir assembly (1) as claimed in claim 1, wherein the base platform (2) has outer side portions (17, 18) which extend outwardly of each end of the weir wall (3), each of said outer side portions (17, 18) being engagable with a complementary slot (8, 9) in an associated end wall (6, 7).

3. A weir assembly (1) as claimed in claim 2, wherein the outer side portions (17, 18) project through the end walls (6, 7) when in engagement therewith.

4. A weir assembly (1) as claimed in claim 2 or claim 3, wherein each end wall (6, 7) has the slot (8, 9) in its lower face for reception of and engagement with the base platform (2).

5. A weir assembly (1) as claimed in claim 4 wherein the slot (8, 9) is open at its lower end.

6. A weir assembly (1) as claimed in claim 5 wherein the slot (8, 9) is deeper than the base platform (2) and when the base platform (2) is engaged with the slot (8, 9) the end wall (6, 7) extends below the base platform (2).

7. A weir assembly (20) as claimed in any preceding claim wherein a downwardly extending anchor flange (16) is provided at an upstream edge of the base platform (2).

8. A weir assembly (1) as claimed in any preceding claim, wherein a lamprey pass (12) is provided formed by a ramp mounted on the base platform (2) abutting a downstream face (4) of the weir wall (3) and gradually sloping upwardly between the upper surface (11) of base platform (2) and the top face (14) of the weir wall (3).

9. A weir assembly (1) as claimed in claim 8, wherein said ramp (12) has a slope in the range 1:4 to 1:6.

10. A weir assembly (1) as claimed in claim 9, wherein said ramp (12) has a slope of 1:5.

11. A weir assembly (1) as claimed in any preceding claim wherein at least one associated buttress element (10) is engagable with an outer face (21) of each end wall (6, 7).

12. A weir assembly (1) as claimed in any preceding claim, wherein the top face (14) of the weir wall (3) is sloped downwardly from an upstream edge (24) to a downstream edge (25) of said top face (14).

13. A weir assembly (1) as claimed in claim 12, wherein the slope of said top face (14) is about 1:5.

14. A weir assembly (30) as claimed in any preceding claim, wherein the base platform (2) extends outwardly of the downstream wall face (4) and the upstream wall face (5) of the weir wall (3) by a distance equal to or greater than the maximum width of the weir wall (3).

15. A method for installing the prefabricated reinforced concrete weir assembly according to any of claims 1-14 in a stream, including the steps:
forming a trench extending across a bed of the stream by excavating material from the stream bed,
forming a marl clay bed in the trench by backfilling the trench to a desired level with marl clay,
placing the prefabricated reinforced concrete weir onto the marl clay bed and securing the prefabricated reinforced concrete weir on the marl clay bed.

## Patentansprüche

1. Vorgefertigte Wehrbaugruppe (1) aus einem verstärkten Betonaufbau, die Folgendes umfasst:
eine Grundplattform (2);
eine hochstehende Wehrwand (3) auf einer oberen Fläche (11) der Grundplattform (2), wobei die Wehrwand (3) eine stromaufwärts liegende Wandfläche (5) und eine stromabwärts liegende Wandfläche (4) aufweist,
und die stromabwärts liegende Wandfläche (4) im Wesentlichen senkrecht zu der oberen Fläche (11) der Grundplattform (2) ist, und die Wehrwand (3) eine V-förmige Oberseite (14) aufweist, die sich nach innen und nach unten von jeder Seite der Oberseite (14) zu einer Strömungskonzentrationsvertiefung (15) auf der Oberseite (14) verjüngt; und
ein Paar hochstehender Endwände (6, 7), die zum verriegelnden Eingriff mit der Grundplattform (2) an jedem Ende der Wehrwand (3) angepasst sind,
**dadurch gekennzeichnet, dass** die stromaufwärts liegende Wandfläche (5) in Bezug zu der oberen Fläche (11) der Grundplattform (2) geneigt ist.

2. Wehrbaugruppe (1) nach Anspruch 1, bei der die Grundplattform (2) äußere Seitenteile (17, 18) aufweist, die sich von jedem Ende der Wehrwand (3) nach außen erstrecken, wobei jeder der äußeren Seitenteile (17, 18) mit einem komplementären Schlitz (8, 9) in einer zugehörigen Endwand (6, 7) in Eingriff gebracht werden kann.

3. Wehrbaugruppe (1) nach Anspruch 2, bei der die äußeren Seitenteile (17, 18) durch die Endwände (6, 7) vorstehen, wenn sie mit diesen in Eingriff stehen.

4. Wehrbaugruppe (1) nach Anspruch 2 oder Anspruch 3, bei der jede Endwand (6, 7) den Schlitz (8, 9) in ihrer Unterseite zur Aufnahme von und zum Eingriff mit der Grundplattform (2) aufweist.

5. Wehrbaugruppe (1) nach Anspruch 4, bei der der Schlitz (8, 9) an seinem unteren Ende offen ist.

6. Wehrbaugruppe (1) nach Anspruch 5, bei der der Schlitz (8, 9) tiefer als die Grundplattform (2) ist, und, wenn die Grundplattform (2) mit dem Schlitz (8, 9) in Eingriff steht, die Endwand (6, 7) sich unter die Grundplattform (2) erstreckt.

7. Wehrbaugruppe (20) nach einem vorhergehenden Anspruch, bei der ein sich stromabwärts erstreckender Ankerflansch (16) an einer stromaufwärts liegenden Kante der Grundplattform (2) vorgesehen ist.

8. Wehrbaugruppe (1) nach einem vorhergehenden Anspruch, bei der ein Lampretendurchgang (12) vorgesehen ist, der durch eine Rampe gebildet wird, welche an der Grundplattform (2) anstoßend an eine stromabwärts liegende Fläche (4) der Wehrwand (3) angebracht ist und graduell zwischen der oberen Fläche (11) der Grundplattform (2) und der Oberseite (14) der Wehrwand (3) nach oben geneigt ist.

9. Wehrbaugruppe (1) nach Anspruch 8, bei der die Rampe (12) eine Neigung im Bereich von 1:4 bis 1:6 aufweist.

10. Wehrbaugruppe (1) nach Anspruch 9, bei der die Rampe (12) eine Neigung von 1:5 aufweist.

11. Wehrbaugruppe (11) nach einem vorhergehenden Anspruch, bei der mindestens ein zugehöriges Stützpfeilerelement (10) mit einer Außenseite (21) jeder Endwand (6, 7) in Eingriff gebracht werden kann.

12. Wehrbaugruppe (1) nach einem vorhergehenden Anspruch, bei der die Oberseite (14) der Wehrwand (3) nach unten von einer stromaufwärts liegenden Kante (24) zu einer stromabwärts liegenden Kante (25) oder Oberseite (14) geneigt ist.

13. Wehrbaugruppe (1) nach Anspruch 12, bei der die Neigung der Oberseite (14) etwa 1:5 beträgt.

14. Wehrbaugruppe (30) nach einem vorhergehenden Anspruch, bei der sich die Grundplattform (2) um einen Abstand gleich oder größer als die maximale Breite der Wehrwand (3) nach außen von der stromabwärts liegenden Wandfläche (4) und der stromaufwärts liegenden Wandfläche (5) der Wehrwand (3) erstreckt.

15. Verfahren zum Installieren der vorgefertigten verstärkten Betonwehrbaugruppe nach einem der Ansprüche 1-14 in einem Fluss, das die folgenden Schritte umfasst:
Bilden eines Grabens, der sich über ein Bett des Flusses erstreckt, durch Ausgraben von Material aus dem Flussbett,
Bilden eines Tonmergelbetts in dem Graben durch Wiederauffüllen des Grabens auf eine gewünschte Füllhöhe mit Tonmergel,
Platzieren des vorgefertigten verstärkten Betonwehrs auf dem Tonmergelbett und Befestigen des vorgefertigten verstärkten Betonwehrs auf dem Tonmergelbett.

## Revendications

1. Ensemble de barrage préfabriqué (1) d'une construction en béton armé comprenant :
une plate-forme de base (2) ;
une paroi de barrage dressée (3) sur une surface supérieure (11) de la plate-forme de base (2), ladite paroi de barrage (3) ayant une face de paroi amont (5) et une face de paroi aval (4), la face de paroi aval (4) étant sensiblement perpendiculaire par rapport à la surface supérieure (11) de la plate-forme de base (2), et ladite paroi de barrage (3) ayant une face de dessus en V (14) qui va en diminuant vers l'intérieur et vers le bas en provenance de chaque côté de la face de dessus (14) jusqu'à un évidement de concentration d'écoulement (15) sur la face de dessus (14) ; et
une paire de parois d'extrémité verticales (6, 7) adaptées à des fins de mise en prise par enclenchement avec la plate-forme de base (2) au niveau de chaque extrémité de la paroi de barrage (3),
**caractérisé en ce que** la face de paroi amont (5) est inclinée par rapport à ladite surface supérieure (11) de la plate-forme de base (2).

2. Ensemble de barrage (1) selon la revendication 1, dans lequel la plate-forme de base (2) a des parties latérales extérieures (17, 18) qui s'étendent vers l'extérieur en provenance de chaque extrémité de la paroi de barrage (3), chacune desdites parties latérales extérieures (17, 18) étant en mesure de se mettre en prise avec une fente complémentaire (8, 9) dans une paroi d'extrémité associée (6, 7).

3. Ensemble de barrage (1) selon la revendication 2, dans lequel les parties latérales extérieures (17, 18) font saillie au travers des parois d'extrémité (6, 7) lorsqu'elles sont mises en prise avec celles-ci.

4. Ensemble de barrage (1) selon la revendication 2 ou la revendication 3, dans lequel chaque paroi d'extrémité (6, 7) a la fente (8, 9) dans sa face inférieure à des fins de réception de, et de mise en prise avec, la plate-forme de base (2).

5. Ensemble de barrage (1) selon la revendication 4, dans lequel la fente (8, 9) est ouverte au niveau de son extrémité inférieure.

6. Ensemble de barrage (1) selon la revendication 5, dans lequel la fente (8, 9) est plus profonde que la plate-forme de base (2) et quand la plate-forme de base (2) est mise en prise avec la fente (8, 9) la paroi d'extrémité (6, 7) s'étend en dessous de la plate-forme de base (2).

7. Ensemble de barrage (20) selon l'une quelconque des revendications précédentes, dans lequel une bride d'ancrage s'étendant vers le bas (16) est mise en oeuvre au niveau d'un bord amont de la plate-forme de base (2).

8. Ensemble de barrage (1) selon l'une quelconque des revendications précédentes, dans lequel un passage pour lamproies (12) est mis en oeuvre formé par une rampe montée sur la plate-forme de base (2) en butée au niveau d'une face aval (4) de la paroi de barrage (3) et s'inclinant progressivement vers le haut entre la surface supérieure (11) de la plate-forme de base (2) et la face de dessus (14) de la paroi de barrage (3).

9. Ensemble de barrage (1) selon la revendication 8, dans lequel ladite rampe (12) a une inclinaison de l'ordre de 1:4 à 1:6.

10. Ensemble de barrage (1) selon la revendication 9, dans lequel ladite rampe (12) a une inclinaison de 1:5.

11. Ensemble de barrage (1) selon l'une quelconque des revendications précédentes, dans lequel au moins un élément de contrefort associé (10) est en mesure de se mettre en prise avec une face extérieure (21) de chaque paroi d'extrémité (6, 7).

12. Ensemble de barrage (1) selon l'une quelconque des revendications précédentes, dans lequel la face de dessus (14) de la paroi de barrage (3) est inclinée vers le bas en provenance d'un bord amont (24) jusqu'à un bord aval (25) de ladite face de dessus (14).

13. Ensemble de barrage (1) selon la revendication 12 dans lequel l'inclinaison de ladite face de dessus (14) est d'environ 1:5.

14. Ensemble de barrage (30) selon l'une quelconque des revendications précédentes, dans lequel la plate-forme de base (2) s'étend vers l'extérieur en provenance de la face de paroi aval (4) et la face de paroi amont (5) de la paroi de barrage (3) sur une distance égale ou supérieure à la largeur maximale de la paroi de barrage (3).

15. Procédé d'installation de l'ensemble de barrage préfabriqué en béton armé selon l'une quelconque des revendications 1 à 14 dans un cours d'eau, comprenant les étapes consistant à :
former une tranchée s'étendant en travers d'un lit du cours d'eau par l'excavation de matériaux en provenance du lit du cours d'eau,
former un lit d'argile marneuse dans la tranchée par le remblayage de la tranchée jusqu'à un niveau souhaité à l'aide d'argile marneuse,
placer le barrage préfabriqué en béton armé sur le lit d'argile marneuse et
assujettir le barrage préfabriqué en béton armé sur le lit d'argile marneuse.
